# EUROPEAN PATENT APPLICATION

(11) **EP 4 354 809 A1**
(43) Date of publication of application: **17.04.2024**
(21) Application number: 22841150.0
(22) Date of filing: 22.06.2022
(51) Int. Cl.: H04L 12/46

(54) **SBFD PATH OPTIMIZATION METHOD, CONTROLLER, NODE, AND STORAGE MEDIUM**

(30) Priority: 14.07.2021 CN 202110794449
(71) Applicant: ZTE Corporation, Shenzhen, Guangdong 518057 (CN)
(72) Inventor: FU, Zhitao, Shenzhen, Guangdong 518057 (CN)
(74) Representative: Savi, Massimiliano
(86) International application number: PCT/CN2022/100567
(87) International publication number: WO 2023/284510

(57) **Abstract**

An SBFD path optimization method, a controller, a node, and a storage medium. The SBFD path optimization method comprises: obtaining SBFD information, the SBFD information representing performing SBFD on a first path (S 100); determining configuration routing information according to the SBFD information, the configuration routing information comprising a path identifier and first path information, the path identifier corresponding to second path information pre-configured in a reflection node of the first path, and a node through which a second path corresponding to the second path information passes being the same as that of the first path (S200); and sending a message carrying the configuration routing information to an initiating node of the first path, so that the message is sent from the initiating node to the reflection node according to the first path and sent from the reflection node to the initiating node according to the second path (S300).

## Description

### CROSS-REFERENCE TO RELATED APPLICATION

This application is filed on the basis of Chinese patent application No. 202110794449.X filed July 14, 2021, and claims priority to the Chinese patent application, the entire contents of which are incorporated herein by reference.

### TECHNICAL FIELD

Embodiments of the present disclosure relate to, but not limited to, the field of communication, and in particular, to a Seamless Bidirectional Forwarding Detection (SBFD) path optimization method, a controller, a node, and a storage medium.

### BACKGROUND

Segment Routing (SR) is a technology of constraining the path of a packet by inserting a set of labels to the packet at the source node. The set of labels represents a path. An SR policy contains a set of candidate paths. Each candidate path contains one or more segment lists. If there are a plurality of valid candidate paths in an SR Policy, the candidate path with highest priority is generally selected as an actual forwarding path, and load balancing is implemented among a plurality of segment lists in the candidate path. When the candidate path with highest priority is invalid, the candidate path with second highest priority is selected as the actual forwarding path. Because the candidate path contains one or more segment lists, if these segment lists are all invalid, the candidate path is invalid. At present, mechanisms for detecting whether a segment list is invalid mainly include Seamless Bidirectional Forwarding Detection (SBFD). An SBFD session involves an initiator node and a reflector node. When performing link detection, the initiator node actively sends an SBFD Echo packet. The reflector end loops back the packet according to its status. The initiator end decides a state of the initiator end according to the packet returned by the reflector node. However, if the path along which the reflector node loops back the packet is inconsistent with the path of the packet sent by the initiator node, the SBFD session may be erroneously reported to be in a DOWN state.

### SUMMARY

The following is a summary of the subject matter set forth in this description. This summary is not intended to limit the scope of protection of the claims.

Embodiments of the present disclosure provide an SBFD path optimization method, a controller, a node, and a storage medium.

In accordance with a first aspect of the present disclosure, an embodiment provides an SBFD path optimization method, which is applied to a controller. The method includes: acquiring SBFD information, where the SBFD information represents performing SBFD on a first path; determining configuration routing information according to the SBFD information, where the configuration routing information includes a path identifier and first path information corresponding to the first path, the path identifier corresponds to second path information pre-configured in a reflector node on the first path, and nodes through which a second path corresponding to the second path information passes are the same as nodes through which the first path passes; and sending a packet carrying the configuration routing information to an initiator node on the first path, such that the packet is sent from the initiator node to the reflector node along the first path and sent from the reflector node to the initiator node along the second path.

In accordance with a second aspect of the present disclosure, an embodiment provides an SBFD path optimization method, which is applied to an initiator node. The method includes: receiving a packet from a controller, where the packet carries configuration routing information, the configuration routing information includes a path identifier and first path information corresponding to the first path, the path identifier corresponds to second path information pre-configured in a reflector node on the first path, and nodes through which a second path corresponding to the second path information passes are the same as nodes through which the first path passes; and sending the packet to the reflector node along the first path according to the configuration routing information, to receive the packet sent from the reflector node along the second path corresponding to the second path information.

In accordance with a third aspect of the present disclosure, an embodiment provides an SBFD path optimization method, which is applied to a reflector node. The method includes: receiving a packet sent from an initiator node along a first path, where the packet carries configuration routing information, the configuration routing information includes a path identifier and first path information corresponding to the first path, the path identifier corresponds to second path information pre-configured in the reflector node, and nodes through which a second path corresponding to the second path information passes are the same as nodes through which the first path passes; and sending the packet to the initiator node along the second path according to the path identifier.

In accordance with a fourth aspect of the present disclosure, an embodiment provides a controller, including: a memory, a processor, and a computer program stored in the memory and executable by the processor, where the computer program, when executed by the processor, causes the processor to implement the SBFD path optimization method in accordance with the first aspect.

In accordance with a fifth aspect of the present disclosure, an embodiment provides a node, including: a memory, a processor, and a computer program stored in the memory and executable by the processor, where the computer program, when executed by the processor, causes the processor to implement the SBFD path optimization method in accordance with the second aspect or implements the SBFD path optimization method in accordance with the third aspect.

In accordance with a sixth aspect of the present disclosure, an embodiment provides a computer-readable storage medium, storing a computer-executable instruction which, when executed by a processor, causes the processor to implement the SBFD path optimization method in accordance with the first aspect, implement the SBFD path optimization method in accordance with the second aspect, or implement the SBFD path optimization method in accordance with the third aspect.

Additional features and advantages of the present disclosure will be set forth in the description which follows, and in part will be obvious from the description, or may be learned by the practice of the present disclosure. Other advantages of the present disclosure can be realized and obtained by the structures particularly pointed out in the description, claims and drawings.

### BRIEF DESCRIPTION OF DRAWINGS

FIG. 1 is a schematic diagram of a system architecture platform configured for executing an SBFD path optimization method according to an embodiment of the present disclosure;
FIG. 2 is a flowchart of an SBFD path optimization method from the perspective of a controller according to an embodiment of the present disclosure;
FIG. 3 is a schematic diagram of an example SRv6 policy in an SBFD path optimization method from the perspective of a controller according to an embodiment of the present disclosure;
FIG. 4 is a flowchart of an example SRv6 policy in an SBFD path optimization method from the perspective of a controller according to an embodiment of the present disclosure;
FIG. 5 is a schematic diagram of an example SR Multiprotocol Label Switching (MPLS) policy in an SBFD path optimization method from the perspective of a controller according to an embodiment of the present disclosure;
FIG. 6 is a flowchart of an example SR MPLS policy in an SBFD path optimization method from the perspective of a controller according to an embodiment of the present disclosure;
FIG. 7 is a flowchart of determining configuration routing information in an SBFD path optimization method from the perspective of a controller according to an embodiment of the present disclosure;
FIG. 8 is a flowchart of generating a preset mapping table in an SBFD path optimization method from the perspective of a controller according to an embodiment of the present disclosure;
FIG. 9 is a flowchart of an SBFD path optimization method from the perspective of an initiator node according to an embodiment of the present disclosure;
FIG. 10 is a flowchart of an SBFD path optimization method from the perspective of a reflector node according to an embodiment of the present disclosure;
FIG. 11 is a schematic diagram of a controller for executing an SBFD path optimization method according to an embodiment of the present disclosure; and
FIG. 12 is a schematic diagram of a node for executing an SBFD path optimization method according to an embodiment of the present disclosure.

### DETAILED DESCRIPTION

To make the technical schemes, and advantages of the present disclosure clear, the present disclosure is described in further detail in conjunction with accompanying drawings and examples. It should be understood that the embodiments described herein are merely used for illustrating the present disclosure, and are not intended to limit the present disclosure.

It is to be noted, although functional modules have been divided in the schematic diagrams of apparatuses and logical orders have been shown in the flowcharts, in some cases, the modules may be divided in a different manner, or the steps shown or described may be executed in an order different from the orders as shown in the flowcharts. The terms such as "first", "second" and the like in the description, the claims, and the accompanying drawings are used to distinguish similar objects, and are not necessarily used to describe a specific sequence or a precedence order.

Embodiments of the present disclosure provide an SBFD path optimization method, a controller, a node, and a storage medium. The SBFD path optimization method includes, but not limited to, the following operations: acquiring SBFD information, where the SBFD information represents performing SBFD on a first path; determining configuration routing information according to the SBFD information, where the configuration routing information includes a path identifier and first path information corresponding to the first path, the path identifier corresponds to second path information pre-configured in a reflector node on the first path, and nodes through which a second path corresponding to the second path information passes are the same as nodes through which the first path passes; and sending a packet carrying the configuration routing information to an initiator node on the first path, such that the packet is sent from the initiator node to the reflector node along the first path and sent from the reflector node to the initiator node along the second path. In an embodiment of the present disclosure, the packet sent by the initiator node carries the path identifier, such that the packet can be sent from the initiator node to the reflector node along the first path and can be sent from the reflector node to the initiator node along the second path. Because the nodes through which the first path passes are the same as the nodes through which the second path passes, the problem of erroneous reporting of the state of SBFD due to the nodes through which the first path passes being different the nodes through which the second path passes can be avoided.

The embodiments of the present disclosure will be described in detail below in conjunction with the accompanying drawings.

The technical schemes of the embodiments of the present disclosure are applicable to a network supporting an SR technology or an SR Policy technology, where the network includes a controller and a plurality of nodes. For example, the network may be a Software-Defined Networking (SDN) network. A tunnel established between forwarding nodes may be a Segment Routing-Traffic Engineering (SR-TE) tunnel. The forwarding nodes support an SR Policy service.

It should be noted that the nodes may be switches, routers, or other devices or network elements that support packet or data forwarding, which is not limited in the embodiments of the present disclosure.

The SR Policy technology is a tunnel traffic steering technology developed based on the SR technology. For SR-TE path computation, a tunnel path is computed according to a color attribute that represents a Service Level Agreement (SLA) requirement of a service tunnel. A head node of a service network finds a matching tunnel according to an extended service route color community attribute and remote node information of the network to implement service traffic forwarding. With the SR Policy technology, an SR tunnel path can be customized for a service having a specific SLA requirement, to realize application-level service forwarding segmentation of the network. For a further detailed description of the SR Policy technology, reference may be made to the related description, and the details will not be described herein.

Some terms or concepts mentioned in the embodiments of the present disclosure are described below.

SBFD is a fast detection protocol. SBFD achieves reachability detection by issuing protocol packets quickly and continuously. The SBFD mechanism involves an initiator end and a reflector end. Before link detection, the initiator end and the reflector end send SBFD Control Packets to each other to advertise an SBFD descriptor and other information. During link detection, the initiator end actively sends an SBFD Echo packet, the reflector end loops back the packet according to a status of the reflector end, and the initiator end determines a state of the initiator end according to the reflected packet.

It should be noted that when SBFD is applied to an SR scenario for detection, there are mainly two scenarios: SBFD for Segment Routing-Label Switched Path (SR-LSP) and SBFD for SR Traffic Engineering Label Switched Path (TELSP). When SBFD is applied to the SR scenario, a path from the initiator end to the reflector end of SBFD is an MPLS label forwarding path, and a return path from the reflector end to the initiator end is a multi-hop Internet Protocol (IP) path.

As the detection end, the initiator end has an SBFD state machine mechanism and a detection mechanism. A state machine of the initiator end has only an Up state and a Down state. Packets sent by the initiator end also have only the Up state and the Down state. The initiator end can receive only a packet in an Up state or an Admin Down state.

For a further detailed description of SBFD, reference may be made to the related description, and the details will not be described herein.

It should be noted that head node and tail node should not be confused with the initiator end and the reflector end. The head node and the tail node are distinguished from each other in terms of the ingress and egress of tunnel traffic in the network. The initiator end and the reflector end are distinguished from each other in terms of packet reachability detection in the SBFD mechanism. For example, in the SBFD mechanism, the head node may be the initiator end (equivalent to an initiator node), and correspondingly the tail node may be the reflector end (equivalent to a reflector node). Alternatively, the head node may be the reflector end (equivalent to a reflector node), and correspondingly the tail node may be the initiator end (equivalent to an initiator node).

In some cases, SBFD instances in forwarding nodes are statically configured by a user, and cannot be dynamically and selectively managed based on services, leading to low flexibility. The embodiments of the present disclosure provide a method for configuring an SBFD mechanism, to dynamically configure SBFD instances for forwarding nodes, thereby achieving more flexible dynamic deployment.

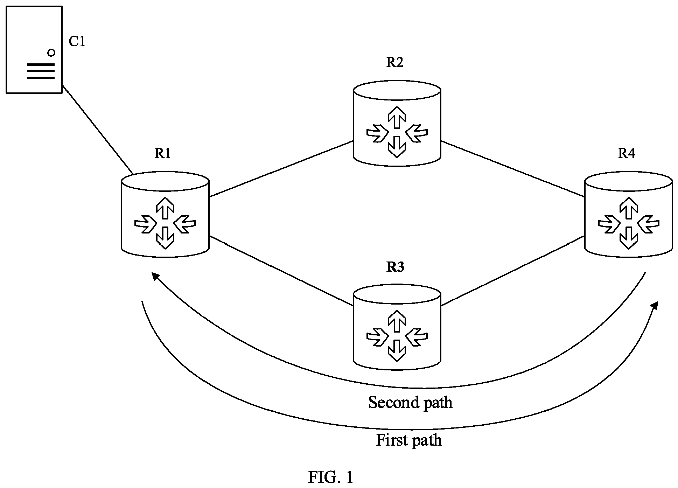

For ease of description and understanding of the methods provided in the embodiments of the present disclosure, referring to FIG. 1, FIG. 1 is a schematic diagram of a system architecture platform configured for executing an SBFD path optimization method according to an embodiment of the present disclosure. The system architecture platform includes a controller C1 and nodes (e.g., including a head node R1, a first intermediate node R2, a second intermediate node R3, and a tail node R4). If a first path is head node R1 - second intermediate node R3 - tail node R4, and a second path is tail node R4 - second intermediate node R3 - head node R1, it can be considered that nodes through which the first path passes are the same as nodes through which the second path passes.

It can be understood by those having ordinary skills in the art that the system architecture platform may be applied to communication network systems, future evolved mobile communication network systems, etc., which is not particularly limited in this embodiment.

Those having ordinary skills in the art may understand that the system architecture platform shown in FIG. 1 does not constitute a limitation to the embodiments of the present disclosure, and more or fewer components than those shown in the figure may be included, or some components may be combined, or a different component arrangement may be used.

Based on the above-mentioned system architecture platform, various embodiments of the SBFD path optimization method of the present disclosure are proposed.

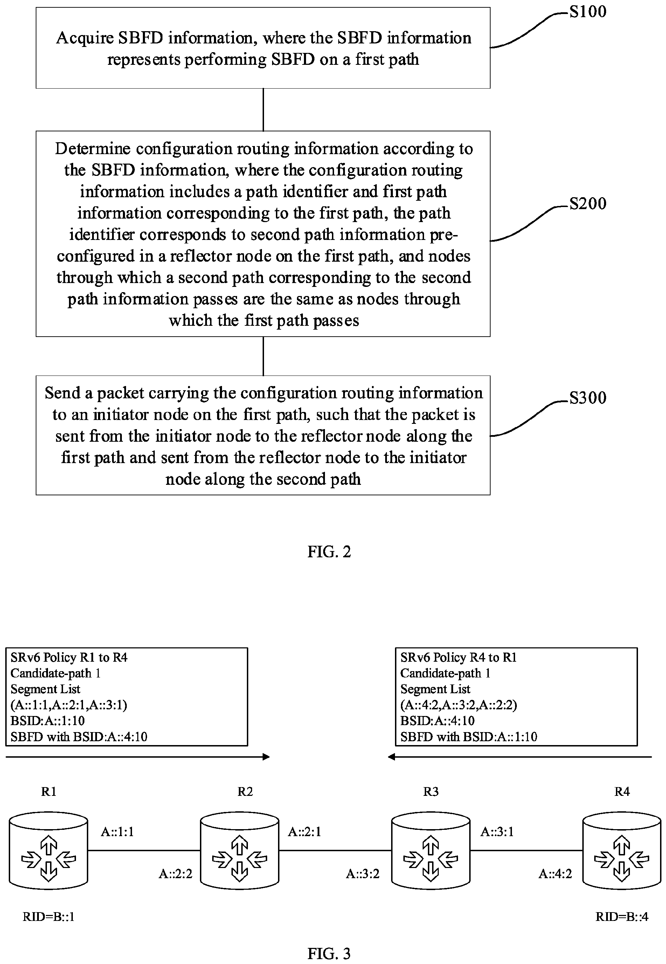

As shown in FIG. 2, FIG. 2 is a flowchart of an SBFD path optimization method according to an embodiment of the present disclosure. The SBFD path optimization method is applied to a controller and includes, but not limited to, the following steps S100, S200, and S300.

At S 100, SBFD information is acquired, where the SBFD information represents performing SBFD on a first path.

The controller acquires SBFD information representing performing SBFD on a first path.

At S200, configuration routing information is determined according to the SBFD information, where the configuration routing information includes a path identifier and first path information corresponding to the first path, the path identifier corresponds to second path information pre-configured in a reflector node on the first path, and nodes through which a second path corresponding to the second path information passes are the same as nodes through which the first path passes.

After receiving the SBFD information, the controller may determine configuration routing information according to the SBFD information, where the configuration routing information includes a path identifier and first path information corresponding to the first path. The first path information may be obtained according to the SBFD information. The first path information includes node information of an initiator node, node information of a reflector node, and node information of other nodes between the initiator node and the reflector node. All path information according to which the initiator node transmits a packet to the reflector node may be preset or pre-configured, and a corresponding path identifier may be set for each piece of path information. The controller can determine the node information of the reflector node according to the first path information. Then, according to the node information of the reflector node and the first path information, the controller can obtain a second path which passes through the same nodes as the first path and uses the reflector node as the head node, obtain a path identifier corresponding to second path information of the second path, and adds the path identifier into the configuration routing information.

At S300, a packet carrying the configuration routing information is sent to an initiator node on the first path, such that the packet is sent from the initiator node to the reflector node along the first path and sent from the reflector node to the initiator node along the second path.

The controller sends a packet carrying the configuration routing information to a head node of the first path (equivalent to the initiator node), such that the initiator node sends the packet to the reflector node along the first path according to the first path information in the configuration routing information. The reflector node receives the packet, then reads a route identifier in the configuration routing information carried in the packet, obtains the second path information according to the route identifier, and sends the packet to the initiator node along the second path according to the second path information. Because the nodes through which the first path passes are the same as the nodes through which the second path passes, the problem of erroneous reporting of the state of SBFD due to the nodes through which the first path passes being different the nodes through which the second path passes can be avoided.

In an embodiment, after obtaining SBFD information representing performing SBFD on a first path, a controller determines configuration routing information according to the SBFD information, where the configuration routing information includes a path identifier and first path information corresponding to the first path, the path identifier corresponds to second path information pre-configured in a reflector node on the first path, and nodes through which a second path corresponding to the second path information passes are the same as nodes through which the first path passes. Then, the controller sends a packet carrying the configuration routing information to a head node of the first path (equivalent to an initiator node), such that the initiator node sends the packet to the reflector node along the first path according to the first path information in the configuration routing information. The reflector node receives the packet, then reads a route identifier in the configuration routing information carried in the packet, obtains the second path information according to the route identifier, and sends the packet to the initiator node along the second path according to the second path information. Because the nodes through which the first path passes are the same as the nodes through which the second path passes, the problem of erroneous reporting of the state of SBFD due to the nodes through which the first path passes being different the nodes through which the second path passes can be avoided.

In an embodiment, referring to FIG. 3, the initiator node R1 and the reflector node R4 each establish an SRv6 policy, where a first path of a segment list of the initiator node is R1-R2-R3-R4, and a second path of a segment list of the reflector node is R4-R3-R2-R1. A::1:1/A::2:2, A::2:1/A::3:2, and A: :3:1/A: :4:2 are corresponding link End.x, respectively. RIDs of R1 and R4 are B::1 and B::4, respectively.

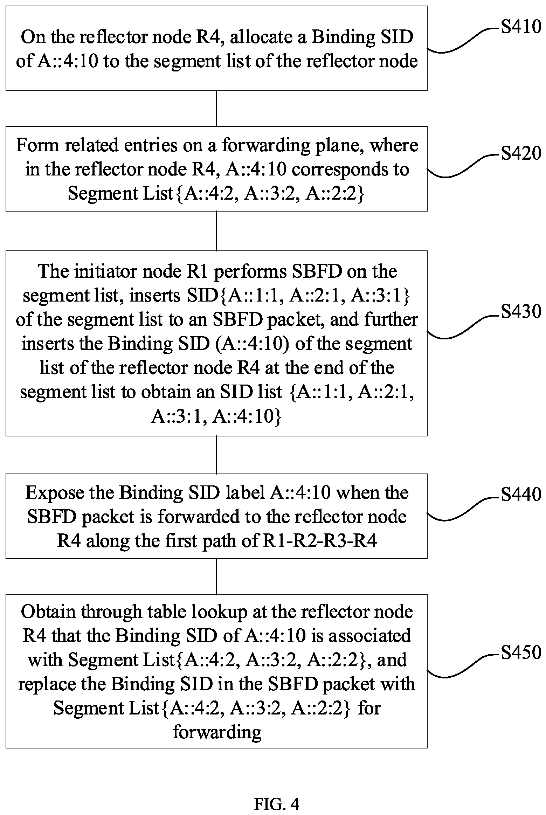

Based on the SRv6 policy scenario of FIG. 3, referring to FIG. 4, an embodiment of the SBFD path optimization method includes the following steps S410, S420, S430, S440, and S450.

At S410, on the reflector node R4, a Binding Segment Identifier (Binding SID) of A::4:10 is allocated to the segment list of the reflector node.

It should be noted that, similarly, on the initiator node R1, a Binding SID of A:: 1:10 may be allocated to the segment list of the initiator node.

At S420, related entries (equivalent to a mapping table) are formed on a forwarding plane, where in the reflector node R4, A::4:10 corresponds to Segment List{A::4:2, A::3:2, A::2:2}.

It should be noted that, similarly, in the node R1, A::1:10 corresponds to Segment List{A::1:1, A::2:1, A::3:1}.

At S430, the initiator node R1 performs SBFD on the segment list, inserts SID{A::1:1, A::2:1, A::3:1} of the segment list to an SBFD packet, and further inserts the Binding SID (A::4:10) of the segment list of the reflector node R4 at the end of the segment list to obtain an SID list {A::1:1, A::2:1, A::3:1, A::4:10}.

At S440, when the SBFD packet is forwarded to the reflector node R4 along the first path of R1-R2-R3-R4, the Binding SID label A::4:10 is exposed.

At S450, it is obtained through table lookup at the reflector node R4 that the Binding SID of A::4:10 is associated with Segment List{A::4:2, A::3:2, A::2:2}, and the Binding SID in the SBFD packet is replaced with Segment List{A::4:2, A::3:2, A::2:2} for forwarding.

A path of Segment List{A::4:2, A::3:2, A::2:2} is R4-R3-R2-R1, and the SBFD packet is returned to the node R1 along this path. Therefore, it can be ensured that the outgoing and return paths of the SBFD packet pass through the same nodes. In this case, a reliable detection result is obtained. Similarly, the SBFD performed on the segment list of the reflector node R4 can be implemented by performing steps similar to those in the above method, so the details will not be repeated herein.

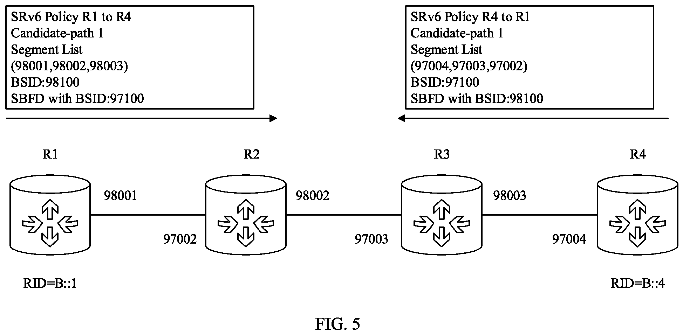

In an embodiment, referring to FIG. 5, the initiator node R1 and the reflector node R4 each establish an SR MPLS policy, where a path of a segment list of the initiator node R1 is R1-R2-R3-R4, and a path of a segment list of the reflector node R4 is R4-R3-R2-R1. 98001/97002, 98002/97003, and 98003/97004 are corresponding link Adjacency Segment Identifiers (adj SIDs), respectively. RIDs of the initiator node R1 and the reflector node R4 are B::1 and B::4, respectively.

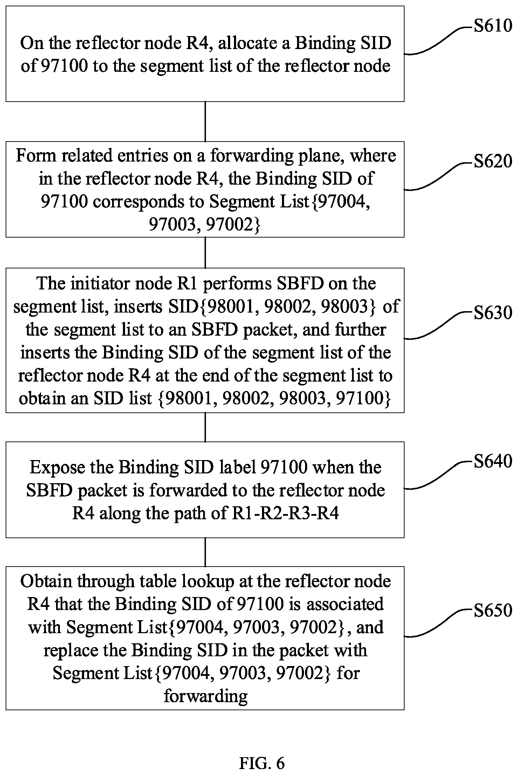

Based on the SR MPLS policy scenario of FIG. 5, referring to FIG. 6, another embodiment of the SBFD path optimization method includes the following steps S610, S620, S630, S640, and S650.

At S610, on the reflector node R4, a Binding SID of 97100 is allocated to the segment list of the reflector node.

It should be noted that, similarly, on the initiator node R1, a Binding SID of 98100 may be allocated to the segment list of the initiator node.

At S620, related entries (equivalent to a mapping table) are formed on a forwarding plane, where in the reflector node R4, the Binding SID of 97100 corresponds to Segment List{97004, 97003, 97002}.

It should be noted that, similarly, on the initiator node R1, the Binding SID of 98100 corresponds to Segment List{98001, 98002, 98003}.

At S630, the initiator node R1 performs SBFD on the segment list, inserts SID{98001, 98002, 98003} of the segment list to an SBFD packet, and further inserts the Binding SID of the segment list of the reflector node R4 at the end of the segment list to obtain an SID list {98001, 98002, 98003, 97100}.

At S640, when the SBFD packet is forwarded to the reflector node R4 along the path of R1-R2-R3-R4, the Binding SID label 97100 is exposed.

At S650, it is obtained through table lookup at the reflector node R4 that the Binding SID of 97100 is associated with Segment List{97004, 97003, 97002}, and the Binding SID in the packet is replaced with Segment List{97004, 97003, 97002} for forwarding.

A path of Segment List{97004, 97003, 97002} is R4-R3-R2-R1, and the SBFD packet is returned to the initiator node R1 along this path. Therefore, it can be ensured that the outgoing and return paths of the SBFD packet pass through the same nodes, and a reliable detection result is obtained. Similarly, the SBFD performed on the segment list on the reflector node R4 can be implemented by performing operations similar to those in the above method, so the details will not be repeated herein.

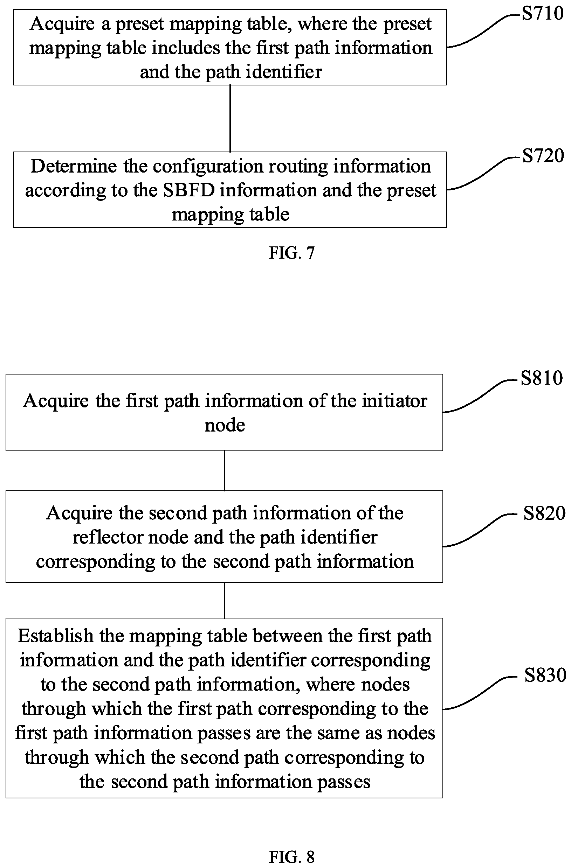

As shown in FIG. 7, determining configuration routing information according to the SBFD information in S200 includes, but not limited to, the following steps S710 and S720.

At S710, a preset mapping table is acquired, where the preset mapping table includes the first path information and the path identifier.

At S720, the configuration routing information is determined according to the SBFD information and the preset mapping table.

After receiving the SBFD information, the controller acquires a preset mapping table including the first path information and the path identifier, and then determines the configuration routing information according to the SBFD information and the preset mapping table. The configuration routing information includes the first path information corresponding to the first path requiring SBFD and the path identifier corresponding to the second path information of the second path that passes through the same nodes as the first path. The second path information is path information pre-configured in the reflector node.

In an embodiment, after receiving the SBFD information, the controller acquires a preset mapping table including the first path information and the path identifier, then obtains the first path information corresponding to the first path according to the SBFD information, queries the preset mapping table according to the first path information to obtain the path identifier mapped to the first path information, and determines the configuration routing information according to the first path information and a path identifier, where the path identifier is the path identifier corresponding to the second path information of the second path that passes through the same nodes as the first path. The second path information is path information pre-configured in the reflector node.

As shown in FIG. 8, generating the mapping table in S710 includes the following steps S810, S820, and S830.

At S810, the first path information of the initiator node is acquired.

At S820, the second path information of the reflector node and the path identifier corresponding to the second path information are acquired.

At S830, the mapping table between the first path information and the path identifier corresponding to the second path information is established, where nodes through which the first path corresponding to the first path information passes are the same as nodes through which the second path corresponding to the second path information passes.

Before performing SBFD on the first path, the controller may set a node as a first node and set other nodes as second nodes according to a connection relationship between the nodes, where the second nodes are the nodes not adjacent to the first node; generate paths between the first node and the second nodes; generate corresponding path information for each of the paths generated; and correspondingly set a path identifier for each piece of path information. When the first node is the initiator node, the path information of the first node is the first path information. When the second node is the reflector node, the path information is the second path information of the second node, and the path identifier of the second node is a path identifier corresponding to the second path information. In this way, a mapping table may be established between the path identifier corresponding to the second path information and the first path information. Nodes through which the first path corresponding to the first path information passes are the same as nodes through which the second path corresponding to the second path information passes.

In an embodiment, after acquiring the first path information of the initiator node, the second path information of the reflector node, and the path identifier corresponding to the second path information, the controller may determine, according to the first path information, the second path that passes through the same nodes as the first path corresponding to the first path information, then determine the path identifier corresponding to the second path information according to the second path information corresponding to the second path, and establish the mapping table according to the first path information and the determined path identifier.

It should be noted that the first path is a class of path using the initiator node as the head node and the reflector node as the tail node. Similarly, the second path is a class of path using the reflector node as the head node and the initiator node as the tail node.

It should be noted that the node serving as the initiator node may alternatively be a reflector node in another scenario, and similarly, the node serving as the reflector node may alternatively be an initiator node in another scenario, which is not particularly limited in the embodiments of the present disclosure.

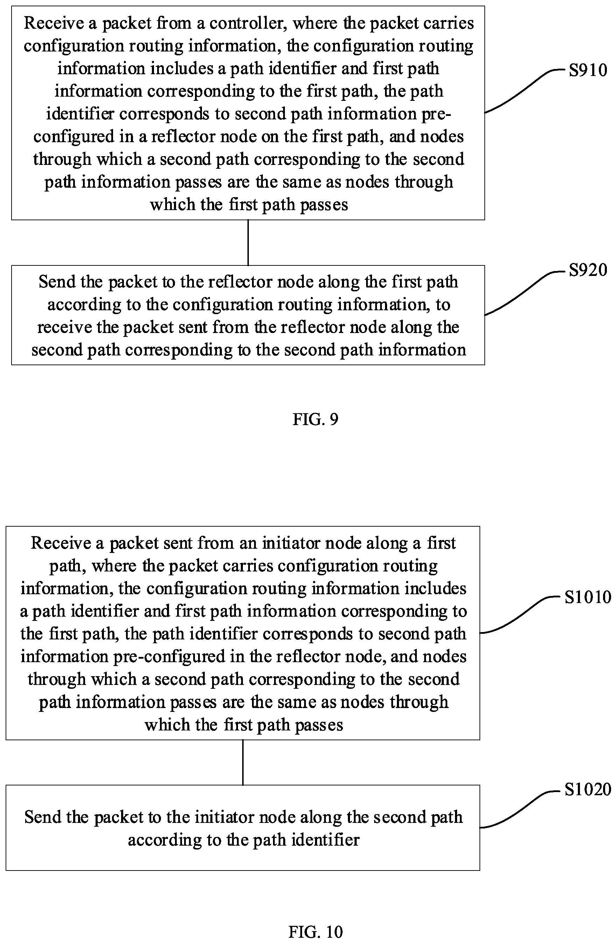

As shown in FIG. 9, FIG. 9 is a flowchart of an SBFD path optimization method according to an embodiment of the present disclosure. The SBFD path optimization method is applied to an initiator node and includes, but not limited to, the following steps S910 and S920.

At S910, a packet from a controller is received, where the packet carries configuration routing information, the configuration routing information includes a path identifier and first path information corresponding to the first path, the path identifier corresponds to second path information pre-configured in a reflector node on the first path, and nodes through which a second path corresponding to the second path information passes are the same as nodes through which the first path passes.

At S920, the packet is sent to the reflector node along the first path according to the configuration routing information, to receive the packet sent from the reflector node along the second path corresponding to the second path information.

The initiator node receives a packet carrying configuration routing information from a controller, where the configuration routing information includes a path identifier and first path information corresponding to the first path, the path identifier corresponds to second path information pre-configured in a reflector node on the first path, and nodes through which a second path corresponding to the second path information passes are the same as nodes through which the first path passes. Then, the initiator node may send the packet to the reflector node along the first path according to the configuration routing information, such that the reflector node may send the received packet to the initiator node along the second path according to the path identifier in the configuration routing information, i.e., the initiator node may receive the packet sent from the reflector node along the second path corresponding to the second path information. Because the nodes through which the first path passes are the same as the nodes through which the second path passes, the problem of erroneous reporting of the state of SBFD due to the nodes through which the first path passes being different the nodes through which the second path passes can be avoided.

As shown in FIG. 10, FIG. 10 is a flowchart of an SBFD path optimization method according to an embodiment of the present disclosure. The SBFD path optimization method is applied to a reflector node and includes, but not limited to, the following steps S1010 and S1020.

At S 1010, a packet sent from an initiator node along a first path is received, where the packet carries configuration routing information, the configuration routing information includes a path identifier and first path information corresponding to the first path, the path identifier corresponds to second path information pre-configured in the reflector node, and nodes through which a second path corresponding to the second path information passes are the same as nodes through which the first path passes.

At S1020, the packet is sent to the initiator node along the second path according to the path identifier.

The reflector node receives a packet carrying configuration routing information sent from an initiator node along a first path, where the configuration routing information includes a path identifier and first path information corresponding to the first path, the path identifier corresponds to second path information pre-configured in the reflector node, and nodes through which a second path corresponding to the second path information passes are the same as nodes through which the first path passes. Then, the reflector node sends the packet to the initiator node along the second path according to the path identifier. Because the nodes through which the first path passes are the same as the nodes through which the second path passes, the problem of erroneous reporting of the state of SBFD due to the nodes through which the first path passes being different the nodes through which the second path passes can be avoided.

Based on the above SBFD path optimization method, various embodiments of the controller, the node, and the computer-readable storage medium of the present disclosure are provided below respectively.

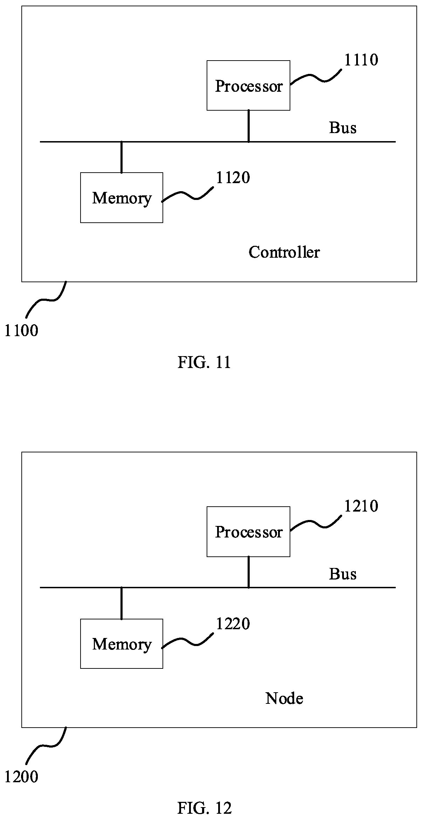

An embodiment of the present disclosure provides a controller. As shown in FIG. 11, the controller 1100 includes a memory 1120, a processor 1110, and a computer program stored in the memory 1120 and executable by the processor 1110.

The processor 1110 and the memory 1120 may be connected by a bus or in other ways.

The memory 1120, as a non-transitory computer-readable storage medium, may be configured for storing a non-transitory software program and a non-transitory computer-executable program. In addition, the memory 1120 may include a high-speed random access memory, and may also include a non-transitory memory, e.g., at least one magnetic disk storage device, flash memory device, or other non-transitory solid-state storage device. In some implementations, the memory 1120 includes memories located remotely from the processor, and the remote memories may be connected to the processor via a network. Examples of the network include, but are not limited to, the Internet, an intranet, a local area network, a mobile communication network, and combinations thereof.

A non-transitory software program and instructions required to implement the SBFD path optimization method in the above embodiments are stored in the memory 1120 which, when executed by the processor 1110, cause the processor 1110 to implement the SBFD path optimization method in the above embodiments, for example, implement the method steps S100 to S300 in FIG. 3, the method steps S410 to S450 in FIG. 4, the method steps S610 to S650 in FIG. 6, the method steps S710 to S720 in FIG. 7, or the method steps S810 to S830 in FIG. 8.

An embodiment of the present disclosure provides a node. As shown in FIG. 12, the node 1200 includes a memory 1220, a processor 1210, and a computer program stored in the memory 1220 and executable by the processor 1210.

The processor 1210 and the memory 1220 may be connected by a bus or in other ways.

The memory 1220, as a non-transitory computer-readable storage medium, may be configured for storing a non-transitory software program and a non-transitory computer-executable program. In addition, the memory 1220 may include a high-speed random access memory, and may also include a non-transitory memory, e.g., at least one magnetic disk storage device, flash memory device, or other non-transitory solid-state storage device. In some implementations, the memory 1220 includes memories located remotely from the processor, and the remote memories may be connected to the processor via a network. Examples of the network include, but are not limited to, the Internet, an intranet, a local area network, a mobile communication network, and combinations thereof.

A non-transitory software program and instructions required to implement the SBFD path optimization method in the above embodiments are stored in the memory 1220 which, when executed by the processor 1210, cause the processor 1210 to implement the SBFD path optimization method from the perspective of an initiator node in the above embodiments, for example, implement the method steps S910 to S920 in FIG. 9; or implement the SBFD path optimization method from the perspective of a reflector node in the above embodiments, for example, execute the method steps S1010 to S1020 in FIG. 10.

In addition, an embodiment of the present disclosure also provides a computer-readable storage medium, storing a computer-executable instruction which, when executed by a processor or controller, for example, by a processor in the embodiment described above, may cause the processor to implement the SBFD path optimization method from the perspective of a controller in the above embodiments, for example, implement the method steps S100 to S300 in FIG. 3, the method steps S410 to S450 in FIG. 4, the method steps S610 to S650 in FIG. 6, the method steps S710 to S720 in FIG. 7, or the method steps S810 to S830 in FIG. 8; or implement the SBFD path optimization method from the perspective of an initiator node in the above embodiments, for example, implement the method steps S910 to S920 in FIG. 9; or implement the SBFD path optimization method from the perspective of a reflector node in the above embodiments, for example, implement the method steps S1010 to S1020 in FIG. 10.

An embodiment of the present disclosure includes: acquiring SBFD information, where the SBFD information represents performing SBFD on a first path; determining configuration routing information according to the SBFD information, where the configuration routing information includes a path identifier and first path information corresponding to the first path, the path identifier corresponds to second path information pre-configured in a reflector node on the first path, and nodes through which a second path corresponding to the second path information passes are the same as nodes through which the first path passes; and sending a packet carrying the configuration routing information to an initiator node on the first path, such that the packet is sent from the initiator node to the reflector node along the first path and sent from the reflector node to the initiator node along the second path. In an embodiment of the present disclosure, the packet sent by the initiator node carries the path identifier, such that the packet can be sent from the initiator node to the reflector node along the first path and can be sent from the reflector node to the initiator node along the second path. Because the nodes through which the first path passes are the same as the nodes through which the second path passes, the problem of erroneous reporting of the state of SBFD due to the nodes through which the first path passes being different the nodes through which the second path passes can be avoided.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

Although the embodiments of the present disclosure have been described above, the present disclosure is not limited to the implementations described above. Those having ordinary skills in the art can make various equivalent modifications or replacements without departing from the scope of the present disclosure. Such equivalent modifications or replacements fall within the scope defined by the claims of the present disclosure.

## Claims

1. A Seamless Bidirectional Forwarding Detection (SBFD) path optimization method, which is applied to a controller, the method comprising:
acquiring SBFD information, wherein the SBFD information represents performing SBFD on a first path;
determining configuration routing information according to the SBFD information, wherein the configuration routing information comprises a path identifier and first path information corresponding to the first path, the path identifier corresponds to second path information pre-configured in a reflector node on the first path, and nodes through which a second path corresponding to the second path information passes are the same as nodes through which the first path passes; and
sending a packet carrying the configuration routing information to an initiator node on the first path, such that the packet is sent from the initiator node to the reflector node along the first path and sent from the reflector node to the initiator node along the second path.

2. The SBFD path optimization method of claim 1, wherein determining configuration routing information according to the SBFD information comprises:
acquiring a preset mapping table, wherein the preset mapping table comprises the first path information and the path identifier; and
determining the configuration routing information according to the SBFD information and the preset mapping table.

3. The SBFD path optimization method of claim 2, wherein determining the configuration routing information according to the SBFD information and the preset mapping table comprises:
obtaining the first path information corresponding to the first path according to the SBFD information;
querying the preset mapping table according to the first path information to obtain the path identifier mapped to the first path information; and
determining the configuration routing information according to the first path information and the path identifier.

4. The SBFD path optimization method of claim 2, wherein the preset mapping table is generated by:
acquiring the first path information of the initiator node;
acquiring the second path information of the reflector node and the path identifier corresponding to the second path information; and
establishing the mapping table between the first path information and the path identifier corresponding to the second path information, wherein nodes through which the first path corresponding to the first path information passes are the same as nodes through which the second path corresponding to the second path information passes.

5. The SBFD path optimization method of claim 4, wherein establishing the mapping table between the first path information and the path identifier corresponding to the second path information comprises:
determining, according to the first path information, the second path which passes through the same nodes as the first path corresponding to the first path information;
determining the path identifier corresponding to the second path information according to the second path information corresponding to the second path; and
establishing the mapping table according to the first path information and the determined path identifier.

6. A Seamless Bidirectional Forwarding Detection (SBFD) path optimization method, which is applied to an initiator node, the method comprising:
receiving a packet from a controller, wherein the packet carries configuration routing information, the configuration routing information comprises a path identifier and first path information corresponding to the first path, the path identifier corresponds to second path information pre-configured in a reflector node on the first path, and nodes through which a second path corresponding to the second path information passes are the same as nodes through which the first path passes; and
sending the packet to the reflector node along the first path according to the configuration routing information, to receive the packet sent from the reflector node along the second path.

7. A Seamless Bidirectional Forwarding Detection (SBFD) path optimization method, which is applied to a reflector node, the method comprising:
receiving a packet sent from an initiator node along a first path, wherein the packet carries configuration routing information, the configuration routing information comprises a path identifier and first path information corresponding to the first path, the path identifier corresponds to second path information pre-configured in the reflector node, and nodes through which a second path corresponding to the second path information passes are the same as nodes through which the first path passes; and
sending the packet to the initiator node along the second path according to the path identifier.

8. A controller, comprising: a memory, a processor, and a computer program stored in the memory and executable by the processor, wherein the computer program, when executed by the processor, causes the processor to perform the SBFD path optimization method of any one of claims 1 to 5.

9. A node, comprising: a memory, a processor, and a computer program stored in the memory and executable by the processor, wherein the computer program, when executed by the processor, causes the processor to perform the SBFD path optimization method of claim 6 or perform the SBFD path optimization method of claim 7.

10. A computer-readable storage medium, storing a computer-executable instruction which, when executed by a processor, causes the processor to perform the SBFD path optimization method of any one of claims 1 to 5, perform the SBFD path optimization method of claim 6, or perform the SBFD path optimization method of claim 7.
